(19) Europäisches Patentamt
European Patent Office
Office européen des brevets

(11) **EP 4 350 929 A1**

(12) **EUROPÄISCHE PATENTANMELDUNG**

(43) Veröffentlichungstag:
**10.04.2024 Patentblatt 2024/15**

(21) Anmeldenummer: **23199445.0**

(22) Anmeldetag: **25.09.2023**

(51) Internationale Patentklassifikation (IPC):
**H02J 3/46** (2006.01)

(52) Gemeinsame Patentklassifikation (CPC):
**H02J 3/46;** H02J 3/004; H02J 13/00034;
H02J 2203/10; H02J 2300/40

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **29.09.2022 EP 22198881**

(71) Anmelder: **Siemens AG Österreich
1210 Wien (AT)**

(72) Erfinder:
• **Fernbach, Andreas
3370 Ybbs an der Donau (AT)**
• **Krammer, Lukas
1220 Wien (AT)**
• **Einfalt, Alfred
1210 Wien (AT)**

(74) Vertreter: **Siemens Patent Attorneys
Postfach 22 16 34
80506 München (DE)**

(54) **STABILISIERUNG EINES STROMNETZES**

(57) Verfahren zum Stabilisieren eines elektrischen Stromnetzes (1), wobei das Stromnetz (1) Assets (31) umfasst, welche durch Erzeuger- und/oder Verbrauchervorrichtungen gebildet werden, und wobei ein Asset (31) jeweils ausgestaltet ist, zum Stabilisieren des Stromnetzes (1) Flexibilität für das Stromnetz (1) bereitzustellen, umfassend die Verfahrensschritte:

a. Erfassen einer digitalen Repräsentation der Assets (31);

b. Bereitstellen der digitalen Repräsentation an eine Aggregatoreinrichtung (10);

c. Empfangen einer Abrufanfrage (61) für eine Flexibilität für das Stromnetz (1) via ein Interface (14) der Aggregatoreinrichtung (10);

d. Bilden einer Reihung (66) zumindest eines Teils der digitalen Repräsentation der Assets (31) durch ein Suchmodul (22) der Aggregatoreinrichtung (10), wobei zur Bildung der Reihung (66) statische Eigenschaften und eine Echtzeitverfügbarkeit eines jeweiligen Assets (31) berücksichtigt werden;

e. Auswählen von nacheinander gereihten Einträgen der Reihung (66), beginnend mit dem ersten Eintrag, bis ein der Abrufanfrage (61) entsprechender Betrag an Flexibilität erreicht ist;

f. Senden eines Aktivierungssignals (67) an die den ausgewählten Einträgen entsprechenden Assets (31), um das Stromnetz (1) zu stabilisieren.

FIG 3

EP 4 350 929 A1

**Beschreibung**

Die Erfindung bezieht sich auf das technische Gebiet der Stabilisierung eines elektrischen Stromnetzes.

Flexibilitäten in Form von steuerbaren Energieerzeugern oder -verbrauchern im elektrischen Netz sind notwendig, um das Netz auf allen Ebenen auszubalancieren (d.h. die Summe der Erzeugung muss zu jeder Zeit der Summe des Verbrauchs entsprechen). Um diese Balance herzustellen, gibt es etablierte Konzepte um mit der sogenannten Regelenergie/Regelleistung auf unterschiedlichen Ebenen im Netz in unterschiedlichen Zeithorizonten eine Regelung durchzuführen. Während die Primärregelung lokal mittels Frequenz gesteuert wird, geht die Sekundär- und Tertiärregelung von explizit vorgehaltenen Reserven an Flexibilität aus, die bei Bedarf abgerufen werden in dem die Referenzleistungen der Bereitsteller entsprechend moduliert werden. Die Sekundärregelung unterscheidet sich von der Tertiärregelung, dabei im Wesentlichen durch unterschiedliche Reaktionszeiten und Abrufzeiten.

Der Netzstabilisierung vorgelagert bilden sogenannte Bilanzgruppen kleinere Einheiten, in denen Verbrauch und Erzeugung zu jedem Zeitpunkt möglichst ausgeglichen sein sollten. Um dies sicherzustellen, können bereits innerhalb der Bilanzgruppe Flexibilitäten verwendet werden. Erst bei einer Abweichung würden dann die Maßnahmen zur Netzstabilisierung notwendig werden.

Flexibilitäten können auf unterschiedliche Arten zur Verfügung gestellt werden. So können beispielsweise Kraftwerke (z.B. unter Verwendung von Gasturbinen) Flexibilität in größerer Menge kurzfristig zur Verfügung stellen. Es ist allerdings auch möglich, kleinere steuerbare Erzeuger und Verbraucher (Distributed Energy Resources, DER, im weiteren Verlauf Assets genannt) zu einem virtuellen Kraftwerk (engl. Virtual Power Plant (VPP)) zu bündeln.

Bisher wurden Flexibilitäten durch einzelne größere Erzeuger oder Verbraucher (Assets) zur Verfügung gestellt. Dabei ist es in jedem Fall notwendig, dass die einzelnen Assets präqualifiziert werden. Dies bedeutet, dass im Vorfeld der Verwendung der Nachweis erbracht werden muss, dass das jeweilige Asset die angegebene Regelleistung (positiv oder negativ) innerhalb einer vorgegebenen Zeit bereitstellen kann. Darüber hinaus muss auch sichergestellt sein, dass das Verhalten des jeweiligen Assets mit einer bestimmten Genauigkeit nachvollzogen werden kann. Durch diese Qualitätssicherung auf der Ebene einzelner Assets kann ein zuverlässiger Abruf (Verfügbarkeit, Arbeit, Leistung) gewährleistet werden.

Grundsätzlich ist es auch möglich eine sehr große Menge von kleinen Assets zu aggregieren. Hierbei ist die Qualitätssicherung auf der Ebene einzelner Assets aus logistischen und wirtschaftlichen Gründen nicht mehr möglich. Vielmehr müssen hier stochastische Methoden zur Auswahl der Assets und zur Qualitätssicherung angewandt werden.

Dabei ergibt sich allerdings ein Problem mit der Skalierbarkeit. Die Verwaltung großer Zahlen an Assets und die entsprechende Auswahl von für den jeweiligen Abruf passenden Assets ist auf dem derzeitigen Stand der Technik nicht möglich. Zum einen ist es technisch und wirtschaftlich nicht möglich, die benötigte Vielzahl an Assets individuell in ein Gesamtsystem zu integrieren. Ungeachtet dessen stellt die Modellierung der einzelnen Assets und die darauf aufbauende Suche, Bewertung und Auswahl eine große Herausforderung dar, die bis dato noch nicht gelöst wurde.

Der Erfindung liegt die Aufgabe zugrunde, ein Stromnetz zu stabilisieren.

Diese Aufgabe wird gelöst durch ein Verfahren zum Stabilisieren eines elektrischen Stromnetzes, wobei das Stromnetz Assets umfasst, welche durch Erzeuger- und/oder Verbrauchervorrichtungen gebildet werden, und wobei ein Asset jeweils ausgestaltet ist, zum Stabilisieren des Stromnetzes Flexibilität für das Stromnetz bereitzustellen, umfassend die Verfahrensschritte:

>    a. Erfassen einer digitalen Repräsentation der Assets;
>    b. Bereitstellen der digitalen Repräsentation an eine Aggregatoreinrichtung;
>    c. Empfangen einer Abrufanfrage für eine Flexibilität für das Stromnetz via ein Interface der Aggregatoreinrichtung;
>    d. Bilden einer Reihung zumindest eines Teils der digitalen Repräsentation der Assets durch ein Suchmodul der Aggregatoreinrichtung, wobei zur Bildung der Reihung statische Eigenschaften und eine Echtzeitverfügbarkeit eines jeweiligen Assets berücksichtigt werden;
>    e. Auswählen von nacheinander gereihten Einträgen der Reihung, beginnend mit dem ersten Eintrag, bis ein der Abrufanfrage entsprechender Betrag an Flexibilität erreicht ist;
>    f. Senden eines Aktivierungssignals an die den ausgewählten Einträgen entsprechenden Assets, um das Stromnetz zu stabilisieren.

Diese Aufgabe wird auch durch ein Verfahren gelöst, bei welchem eine Aggregatoreinrichtung eine Abrufanfrage für eine Flexibilität für das Stromnetz via ein Interface empfängt. Die Agregatoreinrichtung nimmt eine Reihung von mehreren Assets vor, wobei ein Asset jeweils ausgestaltet ist, Flexibilität für das Stromnetz bereitzustellen. Die Reihung wird durch ein Suchmodul vorgenommen, das zum Vornehmen der Reihung sowohl statische Eigenschaften eines jeweiligen Asset, wie auch seine Echtzeitverfügbarkeit berücksichtigt.

Diese Aufgabe wird auch gelöst durch ein Verfahren zum Stabilisieren eines elektrischen Stromnetzes, wobei das Stromnetzes Assets umfasst, welche durch Erzeugervorrichtungen oder Verbrauchervorrichtungen gebildet werden, und ferner Flexibilitäten umfasst, welche durch steuerbare Energieerzeugervorrichtungen gebildet werden, und eine Aggregatoreinrichtung, welche die Assets und die Flexibilitäten durch eine digitale Repräsentation speichert, und folgende Schritte ausgeführt werden:

a) Erfassen und/oder Bereitstellen der digitalen Repräsentation an die Aggregatoreinrichtung;

b) Empfangen einer Abrufanfrage mit einer Zielgröße für Eigenschaften einer Flexibilität für das Stromnetz via ein Interface der Aggregatoreinrichtun;

c) Bilden einer Reihung zumindest eines Teils der digitalen Repräsentation der Assets durch ein Suchmodul der Aggregatoreinrichtung, wobei

bei der Reihung sowohl allgemeine Eigenschaften und die Echtzeitverfügbarkeit eines jeweiligen Flexibilitäten berücksichtigt werden;

d) Senden eines Aktivierungssignals an zumindest eine ausgewählte Flexibilität aus den Flexibilitäten, welches der Reihung gemäß zuerst die Größe der Eigenschaften der Zielgröße erreicht oder überschreitet, um das Stromnetz zu stabilisieren.

Die Aufgabe wird zudem durch ein Datenverarbeitungssystem gelöst, welches einen Prozessor und einen mit dem Prozessor verbundenen Datenspeicher umfasst. Das Datenverarbeitungssystem ist konfiguriert, mit mehreren Assets des Stromnetzes verbunden zu werden und ein erfindungsgemässes Verfahren durchzuführen.

Die Aufgabe wird zudem durch nicht-transitorisches computerlesbares Medium gelöst, das mit ausführbaren Anweisungen kodiert ist, wobei eine Ausführung der ausführbaren Anweisungen ein oder mehrere Datenverarbeitungssysteme veranlasst, erfindungsgemässe Verfahren durchzuführen.

Vorteile und Ausgestaltungen der Erfindung, die einzeln oder in Kombination miteinander einsetzbar sind, sind Gegenstand der Unteransprüche.

Gemäss einem Ausführungsbeispiel werden die Assets von der Niederspannungsebene des Stromnetzes umfasst. Eine Niederspannungsebene umfasst beispielsweise elektrische Niederspannungsetze. Dies ermöglicht es, eine große Anzahl an kleinen Assets zu einer substanziellen Menge an Regelenergie zu bündeln, und mit der gezielten Steuerung der Assets zur Stabilität des Stromnetzes beizutragen.

Gemäss einem Ausführungsbeispiel wird so lange ein nächstgereihter Eintrag in der Reihung ausgewählt, bis ein der Abrufanfrage entsprechender Betrag erreicht ist. Dies erlaubt es auf besonders einfache Weise, das elektrische Stromnetz zu stabilisieren.

Gemäss einem Ausführungsbeispiel wird ausgelöst durch die Aggregatoreinrichtung ein Aktivierungssignal an die ausgewählten Assets gesendet. Dies erlaubt es auf einfache Weise, die ausgewählten Assets zu aktivieren.

Gemäss einem Ausführungsbeispiel wird das Verfahren wiederholt, um einen aktiven Betrieb des Stromnetzes fortlaufend zu überwachen und zu stabilisieren. Dies erlaubt es auf besonders einfache Weise, das elektrische Stromnetz zu stabilisieren.

Gemäss einem Ausführungsbeispiel werden an bei Ausfall eines Assets weitere Assets nachgereiht. Dies erlaubt in besonders dynamischer Weise das elektrische Stromnetz zu stabilisieren und auf Ausfälle einzelner Assets zu reagieren. Dabei ist die Aggregatoreinrichtung beispielsweise ausgestaltet, eine Information zu empfangen welche das ausgefallene Asset identifiziert.

Gemäss einem Ausführungsbeispiel sind die Eigenschaften der Assets und der Flexibilitäten elektrische Eigenschaften.

Gemäss einem Ausführungsbeispiel werden zumindest zwei ausgewählte Assets aus den Assets mit allgemeinen Eigenschaften jeweils mit großer Amplitude, großer verfügbarer Arbeit und/oder großer Zeitkonstante (z.B. thermische Anwendungen) in einem geeigneten Verhältnis mit Assets mit allgemeinen Eigenschaften jeweils mit hoher Dynamik und geringerer Kapazität zu einem kombinierten Asset als ausgewähltes Asset kombiniert, an welche das Aktivierungssignal gesendet wird.

Gemäss einem Ausführungsbeispiel werden Assets mit großer Amplitude, großer verfügbarer Arbeit und/oder großer Zeitkonstante (z.B. thermische Anwendungen) in einem geeigneten Verhältnis mit Assets von hoher Dynamik und geringerer Kapazität kombiniert. Ein Asset von hoher Dynamik und geringer Kapazität kann beispielsweise ein Batteriespeicher sein. Dies erlaubt es, einem grossen Spektrum an möglichen Anfragen für Flexibilität nachzukommen.

Gemäss einem Ausführungsbeispiel prognostiziert ein Prädiktionsmodul für eine Bilanzgruppe, welche durch eine Teilmenge von Assets und/oder Flexibilitäten gebildet ist, eine Bilanz für die Stabilität des Netzes, und wird die Abrufanfrage gesendet, wenn eine Abweichung von einer prognostizierten Bilanz zur tatsächlich vorliegenden Bilanz durch die Aggregatoreinrichtung festgestellt wird.

Gemäss einem Ausführungsbeispiel wird die Abrufanfrage von einer Bilanzgruppe an die Aggregatoreinrichtung gesendet, um eine Abweichung von einer prognostizierten Bilanz der Bilanzgruppe ausgleichen zu können.

Gemäss einem Ausführungsbeispiel wird die Abrufanfrage von einer Kontrolleinreichung eines Übertragungsnetzes an die Aggregatoreinrichtung gesendet, um Primärregelenergie bereitzustellen.

Gemäss einem Ausführungsbeispiel wird die Abrufanfrage von einer Kontrolleinreichung eines Verteilnetzes an die Aggregatoreinrichtung gesendet, um ein Engpassmanagement in dem Verteilnetz vorzunehmen.

Gemäss einem Ausführungsbeispiel umfasst die Abrufanfrage ein Flexibilitätsprofil. Dies ermöglicht eine detaillierte Angabe der angefragten Flexibilität, beispielsweise in Form eines zeitlichen Profils der benötigten Flexibilität.

Gemäss einem Ausführungsbeispiel liefern anhand der Reihung ausgewählte Assets die Flexibilität in das Stromnetz. Hierzu ist die Aggregatoreinrichtung beispielweise eingerichtet, die Reihung über eine Schnittstelle an ein Steuerungssystem zu übergeben, welches die Assets gemäss der Reihung ansteuert oder die Aggregatoreinrichtung ist ausgestaltet, die Assets gemäss der Reihung anzusteuern, beispielsweise zu aktivieren oder zu deaktivieren.

Gemäss einem Ausführungsbeispiel ist der Aggregatoreinrichtung ein Assetpool zugeordnet, welcher die mehreren Assets umfasst.

Gemäss einem Ausführungsbeispiel baut das Verfahren auf IoT-Technologien auf, die eine sehr hoch-skalierbare Suche und Verwaltung von Assets erlaubt. Das Verfahren beinhaltet einen Suchmechanismus, der sowohl die statischen Eigenschaften eines jeweiligen Assets, wie auch seine Echtzeitverfügbarkeit berücksichtigt. Darüber hinaus wird ein Reihungsverfahren vorgeschlagen, das in Echtzeit die für das aktuell erforderliche Flexibilitätsprofil benötigten Assets reiht und auswählt. Um die Zuverlässigkeit des Rankings zu erhöhen, wird auch ein Mechanismus vorgeschlagen, der auch die Performance der bisherigen Abrufe berücksichtigt.

Dadurch, dass beim Ranking keine fixe Auswahl getroffen wird, sondern zumeist mehr als die zur Deckung der Regelung notwendigen Leistung verfügbar ist, können bei Ausfällen von einzelnen Assets auch weitere nachgereiht werden.

Gemäss einem Ausführungsbeispiel wird als Ersatz für eine Präqualifkation der einzelnen Assets eine durch die Suchhistorie berechnete Metrik über die Konfidenz des verfügbaren Pools erstellt. Gemäss einem Ausführungsbeispiel wird zu jeder Zeit eine Schätzung der Konfidenz unter Berücksichtigung der Echtzeitinformationen der Assets bereitgestellt.

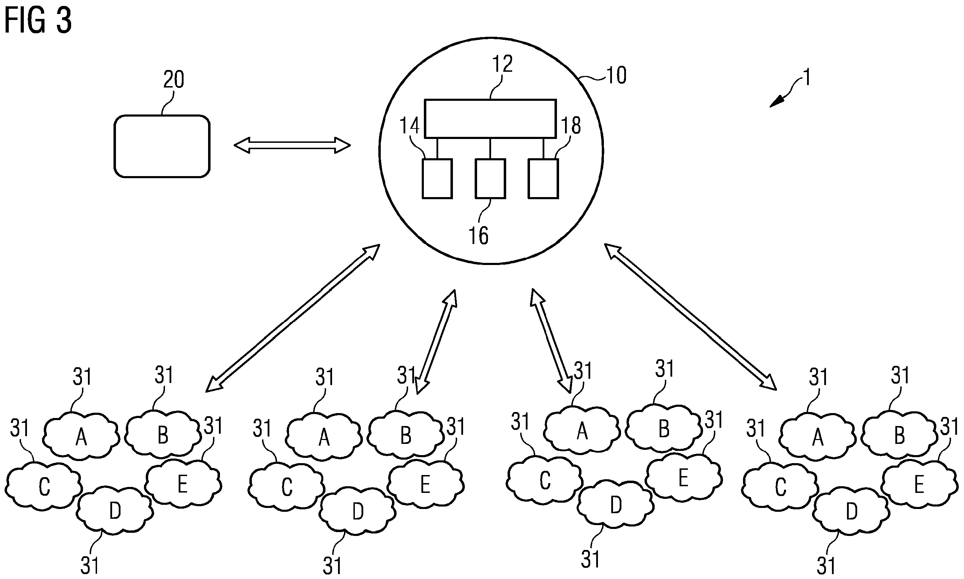

Gemäss einem Ausführungsbeispiel wird durch die hierarchische bzw. föderierte Systemarchitektur (siehe Figur 3) tritt ausschließlich der Aggregator gegenüber den Flexibilitätsbeziehern (z.B Übertragungsnetzbetreiber, Bilanzgruppe, Verteilnetzbetreiber) auf. Hierdurch ist allein dieser je nach Anwendungsfall präqualifikationsverpflichtet.

Gemäss einem Ausführungsbeispiel wird eine große Anzahl an kleinen Assets zu einer substanziellen Menge an Regelenergie gebündelt, und mit der gezielten Steuerung der Assets zur Stabilität des Stromnetzes beigetragen. Dieses kann je nach Ausprägung innerhalb einer Bilanzgruppe oder für die Sekundär- oder Tertiärregelung verwendet werden.

Im Folgenden wird die Erfindung anhand der in den Figuren dargestellten Ausführungsbeispiele näher beschrieben und erläutert.

Figur 1 zeigt schematisch ein Diagramm eines Prozesses der Flexibilitätsbewirtschaftung kleiner Assets in einem elektrischen Stromnetz gemäss einem Ausführungsbeispiel der Erfindung;

Figur 2 zeigt eine schematische Darstellung einer Kumulation von Flexibilitätsaktivierung kleiner Assets gemäss einem Ausführungsbeispiel der Erfindung;

Figur 3 zeigt eine schematische Darstellung einer Systemarchitektur eines als Aggregatoreinrichtung 10 ausgestalteten Datenverarbeitungssystems für ein elektrisches Stromnetz gemäss einem Ausführungsbeispiel der Erfindung;

Figur 4 zeigt schematisch ein Ablaufdiagramm eines Verfahrens gemäss einem Ausführungsbeispiel der Erfindung;

Figur 5 ein Tabelle mit einem Datenmodell für flexible Assets gemäss einem Ausführungsbeispiel der Erfindung.

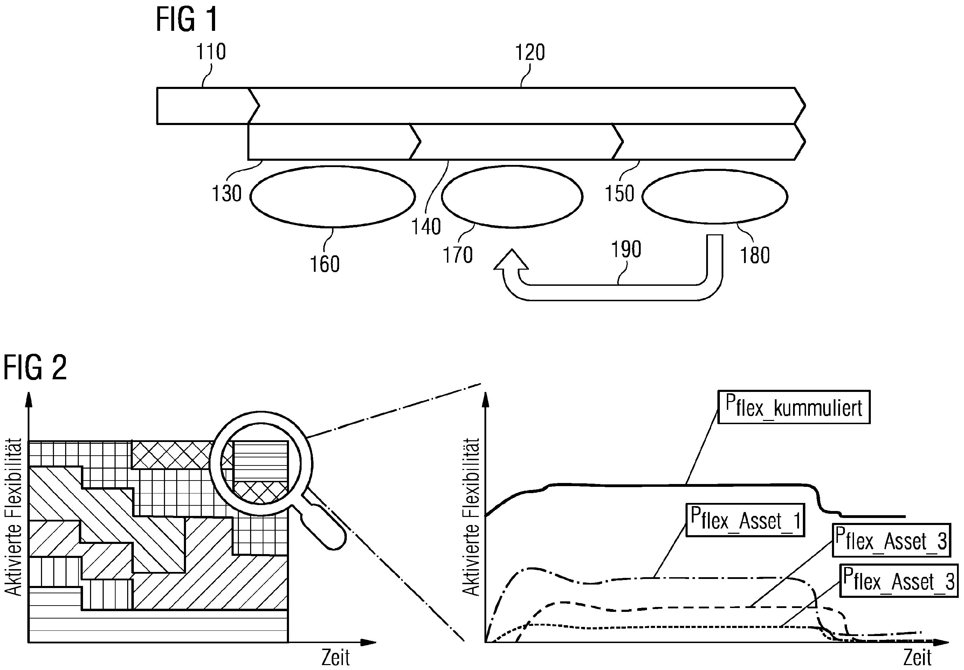

Figur 1 zeigt schematisch ein Diagramm eines Prozesses der Flexibilitätsbewirtschaftung kleiner Assets in einem elektrischen Stromnetz gemäss einem Ausführungsbeispiel der Erfindung. Hier wird zunächst zwischen der Phase 110 der Vertragserrichtungen in welcher vertragliche Regelungen erstellt werden und der Betriebsphase 120 unterschieden. Vertragliche Regelungen müssen zwischen Asset-Eigentümern und Betreiber der Aggregator-Lösung (Flexibility Service Provider, FSP), zwischen Flexibilitätsbezieher und FSP und zwischen Asset-Herstellern und FSP geschlossen werden.

Die Betriebsphase beginnt mit der Prognose 130 der am Folgetag (Day-Ahead Planung) voraussichtlich verfügbaren Flexibilitäten im Pool des Aggregators basierend auf kalendarischen Informationen aber auch externen Services wie z.B. Photovoltaik-Ertragsprognosen. Ebenso fließen hier die Erfahrungen aus historischen Assetdaten ein. Dabei wird die voraussichtliche Verfügbarkeit flexibler Assets geprüft 160. Diese Prognosen sind insbesondere für Bilanzgruppenverantwortliche als Flexibilitätsbezieher während des Flexibilitätsabrufs 140 relevant.

Der Abruf von Flexibilitäten in Form von steuerbaren Energieerzeugern oder Energieverbrauchern durch den FSP bei den verfügbaren Assets wird kurzfristig, in der Größenordnung von Minuten, durch den Flexibilitätsbezieher ausgelöst. Positive Flexibilität wird je nach Assettyp durch Erhöhung der Einspeisung oder Reduktion des Bezugs erreicht, negative Flexibilität durch Reduktion der Einspeisung oder Erhöhung des Bezugs. Nach einem Flexibilitätsabruf nimmt der vorgeschlagenen Reihungsalgorithmus der Aggregator-Lösung basierend auf Assettyp, geographischer Standort, Live-Daten der Assets (momentan verfügbare Flexibilität) und unter Einbeziehung der Performance aus vergangenen Aktivierungen eine Reihung der in Frage kommenden Assets vor. Hier findet auch eine Optimierung nach der Charakteristik (voraussichtlicher Dauer, Amplitude) des Flexibilitätsabrufes statt. Die Auswahl 170 der Assets findet der Reihung entsprechend beginnend beim ersten Eintrag statt. Es wird so lange der nächstgereihte Eintrag ausgewählt, bis der der Flexibilitätsabfrage entsprechende Betrag erreicht ist. An die ausgewählten Assets wird sodann ein Aktivierungssignal gesendet.

Figur 2 zeigt schematisch die Flexibilitätsbeiträge der kleinen Assets zu einem an den Aggregator gestellten Flexiblitätsabruf (links im Bild). Die verschiedenen Schraffuren entsprechen den Beiträgen der einzelnen Assets. Während dieses Zeitraumes können auch ungeplante Abweichungen einzelner Beiträge von den vor der Aktivierung deklarierten Werten auftreten. Der Aggregator versucht, diese mit Hilfe anderer Assets zu kompensieren und den Sollwert des Abrufes möglichst genau einzuhalten. Im rechten Teil des Bildes sind vergrößert Zeitverläufe der Flexibilitätsbeiträge einzelner Assets gezeigt. Ist die Anzahl der Assets groß genug, erfolgt bei ähnlicher Abweichungscharakteristik gemäß dem Gesetz der großen Zahlen eine Ausmittelung.

Nach Beendigung des Flexibilitätsabrufes muss eine Validierung der Flexibilitätsbeiträge jedes einzelnen Assets erfolgen. In Figur 1 ist dies durch die Phase 150 der Validierung und Abrechnung repräsentiert, während welcher die Performance-Evaluierung 180 der Flexibilitätsabrufe durchgeführt wird. Zum einen ist dies zur Berechnung der Asset-bezogenen Bewertungsmetriken notwendig, die die Reihung der Asset bei folgenden Flexibilitätsabfragen an den Aggregator je nach deren Charakteristik beeinflussen. Zum anderen muss die modulierte Energiemenge der Flexibilitätsbeiträge pro Asset und Aktivierungsvorgang zum Zwecke der Abrechnung ermittelt werden. Die Performance-Evaluierung 180 der Flexibilitätsabrufe wird unter Vornahme eines Feedbacks 190 zum Sortieralgorithmus vorgenommen.

Figur 3 zeigt eine schematische Darstellung einer Systemarchitektur für ein elektrisches Stromnetz 1 gemäss einem Ausführungsbeispiel der Erfindung. Das Stromnetz 1 umfasst eine Aggregatoreinrichtung 10, einen Flexibilitätsabnehmer 20, und eine Vielzahl von Assets 31 welche ausgestaltet sind Flexibilität zur Verfügung zu stellen.

Die Aggregatoreinrichtung 10 umfasst einen Prozessor 12, einen mit dem Prozessor 12 verbundenen Datenspeicher 16 und eines oder mehrere Interfaces 14, über welches die Aggregatoreinrichtung 10 mit dem Flexibilitätsabnehmer 20 und mit den Assets 31 verbindbar ist.

Die Aggregatoreinrichtung 10, welche auch einfach Aggregator 10 genannt wird, greift auf bestehende Monitoring- und Wartungsinfrastruktur der Asset-Hersteller- und Betreiber 52, 54, 56, 58 zurück. Über die dafür erforderlichen Schnittstellen werden alle für den Betrieb des Aggregators notwendigen Informationen über die Assets 31 zur Verfügung gestellt. Dies beinhaltet statische Informationen über das Asset 31 wie Geräteklasse, geographischer Standort, Nennleistungs- bzw. Kapazitätswerte, Momentanwerte des aktuellen Lastflusses sowie die Möglichkeit, Kommandos zur Beeinflussung des Lastverhaltens an das Asset 31 zu senden.

Dabei kann der Aggregator um die benötigte Flexibilität von den Assets aggregiert zusammenzustellen auf Informationen von Herstellern von Photovoltaik-Invertern und Batteriespeichern 52, Herstellern von Betreibernetzwerken von Ladestationen für Elektromobilität 54, Hersteller von Heim- und Gebäudeenergiemanagement 56 und/oder Energiegemeinschaften 58 zugreifen.

Die föderierte Systemarchitektur wirkt sich günstig auf die Verfügbarkeit von Flexibilitätsabrufen aus, da abgesehen von einem Ausfall in einer zentralen Komponente Ausfälle in föderierten Subkomponenten zu einem gewissen Grad kompensiert werden können. Im Vergleich zu Systemen zur Bewirtschaftung großer Assets 31, die eine rein zentrale Architektur besitzen, besteht diese Kompensationsmöglichkeit nicht.

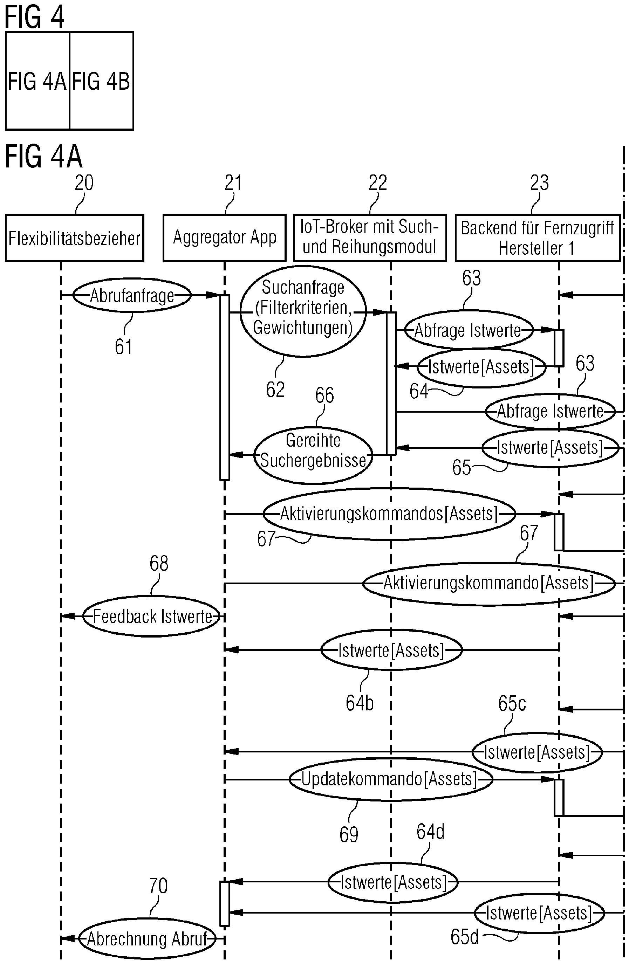

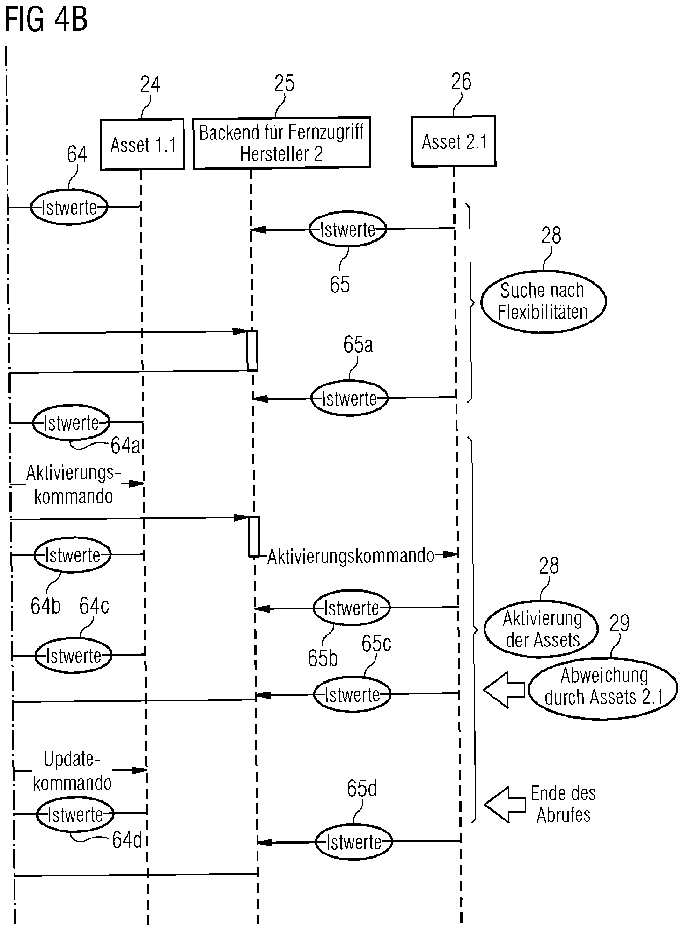

Beschreibung der Algorithmen für Suche, Reihung, Aktivierung und Validierung von Flexibilitäten:
Im Folgenden werden die Algorithmen des Verfahrens, die nach dem Eintreffen einer Flexibilitätsabfrage eines Flexilitätsbeziehers ausgeführt werden, beschrieben. Dies entspricht den Phasen "Flexibilitätsabruf" und "Validierung und Abrechnung" aus Figur 1. Die detaillierte Interaktion zwischen den beteiligten Kommunikationspartnern ist im Sequenzdiagramm in Figur 4 gezeigt. Folgende Akteure werden hierbei berücksichtigt:

- Flexibilitätsbezieher 20
- Aggregator-Applikation 21
- IoT-Broker mit Such- und Reihungsmodul 22
- Backend für Fernzugriff Assethersteller 1 (exemplarisch) 23
- In dieses eingebundenes Asset 1.1 (exemplarisch) 24
- Backend für Fernzugriff Assethersteller 2 (exemplarisch) 25
- In dieses eingebundenes Asset 2.1 (exemplarisch) 26

In dem in Figur 4 dargestellten Ausführungsbeispiel umfasst das Verfahren Teilverfahren, welche eine Suche 27 nach Flexibilitäten und eine Aktivierung 28 der Assets umfassen.

Eine Abrufanfrage 61 des Flexibiltätsbeziehers 20 wird an die Aggregator-App 21 gestellt und beinhaltet ein zeitliches Profil der benötigten Verschiebung (Modulation) der Lasten im Netz 1 und des gewünschten geographischen Gebietes. Hieraus errechnet die Aggregator-App 21 die Filterkriterien und die Gewichtungen der Attribute, nach welchen der verfügbare Asset-Pool durch das Such- und Reihungsmodul 22 durchsucht wird und die Reihung der Suchergebnisse vorgenommen werden soll.

Folgende Filterkriterien der Suchanfrage 62 werden vorgeschlagen:

- Flexibilitätstyp (positiv, negativ)
- Geographische Verortung
- Assettypen

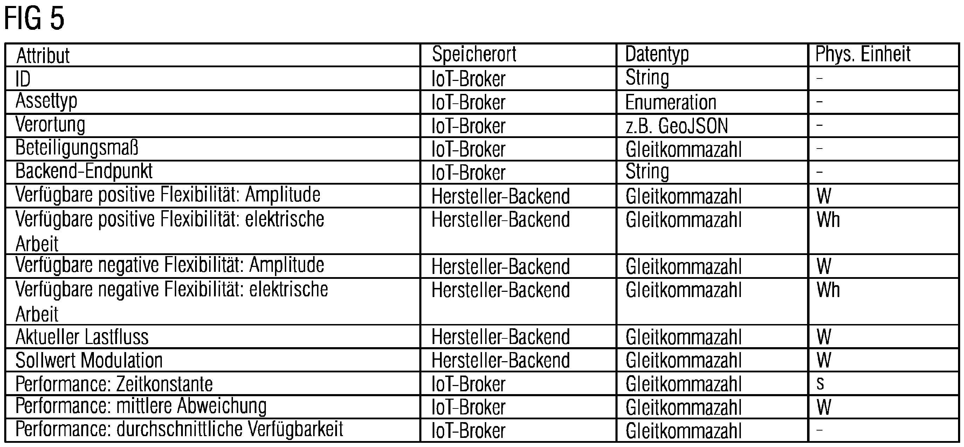

Über die Angabe der Assettypen, d.h. der DER-Geräteklasse (Photovoltaik-Wechselrichter, Wärmepumpe, Batteriespeicher...) kann bereits Einfluss auf die Charakteristik der bereitgestellten Modulation genommen werden. Das Such- und Reihungsmodul 22 führt eine Suchanfrage entsprechend den Filterkriterien über die am IoT-Broker vorgehaltenen Asset-Datensätze aus. Dieses liefert die den Filterkriterien entsprechenden Assets mit den in der Tabelle in Figur 5 dargestellten Datenmodell mit den mit Speicherort "IoT-Broker" gekennzeichneten, statischen Attributen.

In einem nächsten Schritt werden die hieraus resultierenden Asset-Datensätze um die dynamischen Istwerte der verbleibenden Datenpunkte ergänzt. Dies beinhaltet die in der Tabelle von Figur 5 mit Speicherort "Hersteller-Backend" gekennzeichneten Attribute. Hierzu führt das Such- und Reihungsmodul 22 Abfragen 63 bei den betreffenden Hersteller-Backends durch, die über das Attribut "Backend-Endpunkt" definiert sind. In Antwort auf die Abfragen 63 werden die Istwerte 64, 65 für die jeweiligen Assets 24, 25 an das Such- und Reihungsmodul 22 zurückgemeldet.

Im Anschluss erfolgt eine Reihung 66 der nun sowohl aus statischen als auch dynamischen Attributen zusammengesetzten Asset-Datensätze nach der gewünschten Gewichtung. Ziel dieser Reihung 66 ist die Optimierung des durch den Aggregator 10 angebotenen Flexibilitätsportfolios nach verschiedenen Anforderungen:

- Amplitude des Abrufes
- Dynamik (Einhaltung eines bestimmten, nicht notwendigerweise konstanten zeitlichen Profils)
- Geforderte elektrische Arbeit
- Erlaubte Abweichungen vom geforderten Profil

Eine mögliche Strategie zum Aufbau des abgerufenen Flexibilitätsprofils ist, Assets mit großer Amplitude, großer verfügbarer Arbeit und großer Zeitkonstante (z.B. thermische Anwendungen) im geeigneten Verhältnis mit Assets von hoher Dynamik und geringerer Kapazität (z.B. Batteriespeicher) zu kombinieren.

Folgende Asset-Attribute kommen als Reihungskriterien in Frage:

- Amplitude
- Elektrische Arbeit
- Entfernung vom geographischen Suchgebiet
- Vom Besitzer gewünschtes Beteiligungsmaß
- Performancemetriken wie

  ◦ Zeitkonstante
  ◦ Mittlere Abweichung vom Sollwert
  ◦ Durchschnittliche Verfügbarkeit

Die Aggregator-App 21 wählt nun aus der resultierenden gereihten Liste an Assets beginnend beim höchstgereihten so lange Assets aus, bis die Anforderungen des Flexibilitätsbeziehers 20 hinsichtlich Amplitude, elektrischer Arbeit und Dauer oder auch das geforderte zeitliche Profil erreicht ist. Dabei können auch mehrere aufeinander folgende Such- und Reihungsvorgänge notwendig sein.

Sodann erfolgt die Aktivierung der ausgewählten Assets 24, 26, indem die Aggregator-App 21 Aktivierungskommandos 67 an die Backends 23, 25 der Hersteller für Fernzugriff sendet, die die notwendigen Informationen für die diesen zugeordneten, zu aktivierenden Assets enthalten und an die Assets 24, 26 senden worauf diese aktiviert werden. Insgesamt stehen folgende Kommandos mit den angegebenen Attributen zur Beeinflussung von Assets durch die Aggregator-App 21 zur Verfügung.

- Aktivierungskommando: Amplitude, Startzeitpunkt, Endzeitpunkt bzw. Zeitreihe (Profil)
- Deaktivierungskommando: Endzeitpunkt
- Updatekommando: Amplitude, Startzeitpunkt, Endzeitpunkt bzw. Zeitreihe (Profil).

In der Abrufphase führt die Aggregator-App 21 eine Überwachung des Verhaltens jedes Assets 24, 26 mittels Ist-Werten, die via der Backends 23, 25 zur Fernwartung an die Aggregator-App 21 übertragen werden, durch. Dies ist durch die Nachrichten 64a, 64b, 64c, 64d, 65a, 65b, 65c, 65d dargestellt, welche Istwerte von den jeweiligen Asstes 26, 26 via deren Backends 23, 25 zu dem Such- und Reichungsmodul 22 übermitteln. Damit werden folgende Funktionen erfüllt:

- Berechnung des kumulierten Ist-Wertes der Modulation. Dieser wird in regelmäßigen Intervallen an den Flexibilitätsbezieher 20 für dortige Monitoring-Zwecke übertragen 68
- Kompensation der Abweichungen vom Soll-Wert des Abrufprofils durch Senden von Updatekommandos 69 an aktive Assets bzw. durch Auslösen von zusätzlichen Aktivierungen bisher noch nicht aktivierter Assets aus den gereihten Suchergebnissen
- Validierung des Verhaltens jedes Assets hinsichtlich folgender Kriterien

  ◦ Einhaltung des Sollwertes. Über das gesamte Aktivierungsintervall wird die Abweichung 29 vom Sollwert überwacht und daraus nach folgender Formel die Mittlere Abweichung der Amplitude vom Sollwert berechnet:

$$\Delta P_{mod} = \sqrt{\frac{1}{N} \sum \left(P_{mod,ist}(i) - P_{mod,soll}(i)\right)^2}$$

  Hierbei ist $P_{mod,ist}(i)$ der Istwert der Modulation zum Zeitpunkt i, $P_{mod,soll}(i)$ der Sollwert der Modulation zum Zeitpunkt i.

  o Die Zeitkonstante, nach welcher die Änderung des Lastflusses eines Assets zu Beginn und Ende eines Aktivierungsintervalls stattfindet. Damit wird ein Maß für die Dynamik von Aktivierungen ermittelt.

  ◦ Kommunikationsseitige Verfügbarkeit des Assets während einer Aktivierung durch Erfassung fehlender Ist-Werte.

Diese Performancewerte werden für jedes Asset durch den IoT-Broker mit Such- und Reihungsmodul vorgehalten, um bei Reihungen der Ergebnisse zukünftiger Suchanfragen berücksichtigt werden zu können.

- Erfassung der modulierten elektrischen Arbeit eines Assets zu Abrechnungszwecken. Die Baseline ist hierbei der Lastfluss des Assets zum Zeitpunkt, zu dem das Aktivierungsintervall beginnt. Die modulierte elektrische Arbeit wird nach folgender Formel berechnet:

$$E_{mod} = \sum \left(P_{mod}(i) - P_{base}\right) \cdot \Delta t_i$$

Hierbei ist $Pmod(i)$ der Istwert der Modulation zum Zeitpunkt i, $Pbase$ der Lastfluss vor Beginn der Aktivierung und $\Delta t_i$ das jeweilige Zeitintervall zum Zeitpunkt i.

Nach Ablauf der Aktivierungsphase erfolgt die Abrechnung 70 des Flexibilitätsabrufes, also die Berechnung der Vergütungen der durch die beteiligten Assets 24, 26 bereitgestellten modulierten Arbeit sowie die Berechnung der Kosten des dem Flexibilitätsbezieher tatsächlich gelieferten Flexibilitätsprofils. Um die für jeden Assettyp unterschiedlichen Auswirkungen von Aktivierungen angemessen zu entschädigen, sind Typspezifisch unterschiedliche Tarife denkbar.

Gemäss einem Ausführungsbeispiel wird eine Präqualifikation im Fall einer Teilnahme am Regelenergiemarkt nur auf Aggregatorebene vorgenommen, also nicht auf Assetebene. Einzig der FSP muss darlegen, dass er mit seinem zur Verfügung stehenden Asset-Pool die deklarierte Flexibilität bereitstellen kann. Damit entfällt dieser Vorgang für Asseteigentümer.

Gemäss einem Ausführungsbeispiel ist der Aggregator als reine Cloud-Lösung implementiert. Die notwendige IT-Infrastruktur zur Anbindung der flexiblen Assets ist bereits in Form von Monitoring- und Wartungslösungen seitens der Asset-Hersteller vorhanden. Der einmalige Aufwand, die notwendigen Schnittstellen zwischen Hersteller-IT und Aggregator zur Verfügung zu stellen, rechtfertigt sich durch in weiterer Folge beliebig hohe Skalierbarkeit bezüglich Asset-Pool-Größe je Hersteller. Dies führt zu einer wesentlich rentableren Lösung als durch die individuelle Anbindung einzelner kleiner Assets.

Gemäss einem Ausführungsbeispiel ist die durchschnittliche Verfügbarkeit von Flexibilitätsbereitstellungen aus einem Pool flexibler Assets höher als die eines einzelnen, großen Assets. Dies wird durch eine föderierte Architektur erreicht, die etwaige Ausfälle in einzelnen Asset-Pools durch entsprechende Reservenbildung in verbleibenden Pools kompensieren kann.

Gemäss einem Ausführungsbeispiel erlaubt das Reihungsverfahren, das auf die Flexibilitätsangebote der an der Aggregator-lösung teilnehmenden Assets angewendet wird, eine optimale Komposition eines Flexibilitätsabrufprofils aus den einzelnen Aktivierungsbeiträgen hinsichtlich zu erwartender Abweichungen vom Sollwert. Gleichzeitig kann das durch den Aggregator angebotene Flexibilitäts-Portfolio an verschiedene Anforderungen angepasst werden. Denkbar sind hier zum Beispiel unterschiedliche Produkte, die sich folgendermaßen unterscheiden:

- Anforderungen an die Abweichungen vom Sollwert eines Abrufes, die sich in den Zusammensetzungen der aktivierten Asset-Pools widerspiegeln und somit auch in den Konditionen, die dem Flexibilitätsbezieher angeboten werden.
- Anforderungen an die Dynamik eines Abrufes, die sich ebenso in den Zusammensetzungen der aktivierten Asset-Pools und den resultierenden Tarifen bzw. Konditionen widerspiegeln.

**Patentansprüche**

1. Verfahren zum Stabilisieren eines elektrischen Stromnetzes (1), wobei das Stromnetz (1) Assets (31) umfasst, welche durch Erzeuger- und/oder Verbrauchervorrichtungen gebildet werden, und wobei ein Asset (31) jeweils ausgestaltet ist, zum Stabilisieren des Stromnetzes (1) Flexibilität für das Stromnetz (1) bereitzustellen, umfassend die Verfahrensschritte:

   a. Erfassen einer digitalen Repräsentation der Assets (31);
   b. Bereitstellen der digitalen Repräsentation an eine Aggregatoreinrichtung (10);
   c. Empfangen einer Abrufanfrage (61) für eine Flexibilität für das Stromnetz (1) via ein Interface (14) der Aggregatoreinrichtung (10);
   d. Bilden einer Reihung (66) zumindest eines Teils der digitalen Repräsentation der Assets (31) durch ein Suchmodul (22) der Aggregatoreinrichtung (10), wobei zur Bildung der Reihung (66) statische Eigenschaften und eine Echtzeitverfügbarkeit eines jeweiligen Assets (31) berücksichtigt werden;
   e. Auswählen von nacheinander gereihten Einträgen der Reihung (66), beginnend mit dem ersten Eintrag, bis ein der Abrufanfrage (61) entsprechender Betrag an Flexibilität erreicht ist;
   f. Senden eines Aktivierungssignals (67) an die den ausgewählten Einträgen entsprechenden Assets (31), um das Stromnetz (1) zu stabilisieren.

2. Verfahren nach Anspruch 1
   wobei die Assets (31) Teil der Niederspannungsebene des Stromnetzes (1) sind.

3. Verfahren nach einem der vorhergehenden Ansprüche,
   wobei das Verfahren wiederholt wird, um einen aktiven Betrieb des Stromnetzes (1) fortlaufend zu überwachen und zu stabilisieren.

4. Verfahren nach einem der vorhergehenden Ansprüche,
   wobei bei Ausfall eines Assets (31) weitere Assets nachgereiht werden.

5. Verfahren nach einem der vorhergehenden Ansprüche,
   wobei Assets (31) mit großer Amplitude, großer verfügbarer Arbeit und/oder großer Zeitkonstante (z.B. thermische Anwendungen) in einem geeigneten Verhältnis mit Assets (31) von hoher Dynamik und geringerer Kapazität kombiniert werden.

6. Verfahren nach einem der vorhergehenden Ansprüche,
   wobei ein Prädiktionsmodul für eine Bilanzgruppe, welche durch eine Teilmenge von Assets (31) und/oder Flexibilitäten gebildet ist, eine Bilanz für die Stabilität des Stromnetzes (1) prognostiziert, und die Abrufanfrage (61) gesendet wird, wenn eine Abweichung von einer prognostizierten Bilanz zur tatsächlich vorliegenden Bilanz durch die Aggregatoreinrichtung (10) festgestellt wird.

7. Verfahren nach einem der vorhergehenden Ansprüche,
   wobei, die Abrufanfrage (61) von einer Bilanzgruppe an die Aggregatoreinrichtung (10) gesendet wird, um eine Abweichung von einer prognostizierten Bilanz der Bilanzgruppe ausgleichen zu können.

8. Verfahren nach einem der vorhergehenden Ansprüche,
wobei die Abrufanfrage (61) von einer Kontrolleinreichung eines Übertragungsnetzes an die Aggregatoreinrichtung (10) gesendet wird, um Primärregelenergie bereitzustellen.

9. Verfahren nach einem der vorhergehenden Ansprüche,
wobei die Abrufanfrage von einer Kontrolleinreichung eines Verteilnetzes an die Aggregatoreinrichtung (10) gesendet wird, um ein Engpassmanagement in dem Verteilnetz vorzunehmen.

10. Verfahren nach einem der vorhergehenden Ansprüche,
wobei die Abrufanfrage (61) ein Flexibilitätsprofil umfasst, beispielsweise in Form eines zeitlichen Profils der benötigten Flexibilität.

11. Verfahren nach einem der vorhergehenden Ansprüche,
wobei anhand der Reihung ausgewählte Assets (31) die Flexibilität in das Stromnetz (1) liefern.

12. Verfahren nach einem der vorhergehenden Ansprüche,
wobei der Aggregatoreinrichtung (10) ein Assetpool zugeordnet ist, welcher die mehreren Assets (31) umfasst.

13. Datenverarbeitungssystem (10) zur automatischen Stabilisierung eines elektrischen Stromnetzes (1), umfassend einen Prozessor (12) und einen mit dem Prozessor verbundenen Datenspeicher (14), wobei das Datenverarbeitungssystem konfiguriert ist, mit mehreren Assets (31) eines Stromnetzes (1) verbunden zu werden und das Verfahren nach einem der vorhergehenden Ansprüche durchzuführen.

14. Nicht-transitorisches computerlesbares Medium, das mit ausführbaren Anweisungen kodiert ist, wobei eine Ausführung der ausführbaren Anweisungen ein oder mehrere Datenverarbeitungssysteme veranlasst, das Verfahren nach einem der Ansprüche 1 bis 12 durchzuführen.

EP 4 350 929 A1

## FIG 1

## FIG 2

$P_{flex\_kummuliert}$

$P_{flex\_Asset\_1}$

$P_{flex\_Asset\_3}$

$P_{flex\_Asset\_3}$

Aktivierte Flexibilität

Zeit

FIG 3

# FIG 4

| FIG 4A | FIG 4B |
|--------|--------|

# FIG 4A

20 Flexibilitätsbezieher
21 Aggregator App
22 IoT-Broker mit Such- und Reihungsmodul
23 Backend für Fernzugriff Hersteller 1

Abrufanfrage 61

Suchanfrage (Filterkriterien, Gewichtungen) 62

63 Abfrage Istwerte
Istwerte[Assets] 64

63 Abfrage Istwerte
Istwerte[Assets] 65

66 Gereihte Suchergebnisse

Aktivierungskommandos[Assets] 67

Aktivierungskommando[Assets] 67

68 Feedback Istwerte

Istwerte[Assets] 64b

65c

Istwerte[Assets]

Updatekommando[Assets] 69

64d

Istwerte[Assets]

Istwerte[Assets] 65d

70 Abrechnung Abruf

# FIG 4B

24 — Asset 1.1

25 — Backend für Fernzugriff Hersteller 2

26 — Asset 2.1

64 — Istwerte

Istwerte — 65

28 — Suche nach Flexibilitäten

65a — Istwerte

Istwerte — 64a

Aktivierungs-kommando

Aktivierungskommando

Istwerte

64b   64c

Istwerte

28 — Aktivierung der Assets

Istwerte — 65b   65c

29 — Abweichung durch Assets 2.1

Update-kommando

Istwerte — 64d

65d — Istwerte

Ende des Abrufes

## FIG 5

| Attribut | Speicherort | Datentyp | Phys. Einheit |
|---|---|---|---|
| ID | IoT-Broker | String | – |
| Assettyp | IoT-Broker | Enumeration | – |
| Verortung | IoT-Broker | z.B. GeoJSON | – |
| Beteiligungsmaß | IoT-Broker | Gleitkommazahl | – |
| Backend-Endpunkt | IoT-Broker | String | – |
| Verfügbare positive Flexibilität: Amplitude | Hersteller-Backend | Gleitkommazahl | W |
| Verfügbare positive Flexibilität: elektrische Arbeit | Hersteller-Backend | Gleitkommazahl | Wh |
| Verfügbare negative Flexibilität: Amplitude | Hersteller-Backend | Gleitkommazahl | W |
| Verfügbare negative Flexibilität: elektrische Arbeit | Hersteller-Backend | Gleitkommazahl | Wh |
| Aktueller Lastfluss | Hersteller-Backend | Gleitkommazahl | W |
| Sollwert Modulation | Hersteller-Backend | Gleitkommazahl | W |
| Performance: Zeitkonstante | IoT-Broker | Gleitkommazahl | s |
| Performance: mittlere Abweichung | IoT-Broker | Gleitkommazahl | W |
| Performance: durchschnittliche Verfügbarkeit | IoT-Broker | Gleitkommazahl | – |

EP 4 350 929 A1

**Europäisches Patentamt**
**European Patent Office**
**Office européen des brevets**

# EUROPÄISCHER RECHERCHENBERICHT

**Nummer der Anmeldung**

EP 23 19 9445

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 931 111 B2 (ORIGAMI ENERGY LTD [GB]) 23. Februar 2021 (2021-02-23) * Spalten 1-10; Abbildungen 1/6-6/6 * ----- | 1-14 | INV. H02J3/46 |
| A | EP 3 340 415 A1 (SIEMENS SCHWEIZ AG [CH]) 27. Juni 2018 (2018-06-27) * Absätze [0001] - [0042]; Abbildungen 1-3 * ----- | 1-14 | |
| A | US 2015/001944 A1 (MARKOWZ GEORG [DE] ET AL) 1. Januar 2015 (2015-01-01) * Zusammenfassung; Abbildungen 1-5 * ----- | 1-14 | |
| A | US 2014/277808 A1 (IRISARRI GUILLERMO [US] ET AL) 18. September 2014 (2014-09-18) * Absätze [0017] - [0045]; Abbildungen 1-7 * ----- | 1-14 | |
| A | US 2012/029720 A1 (CHERIAN SUNIL [US] ET AL) 2. Februar 2012 (2012-02-02) * Absätze [0003] - [0027]; Abbildungen 1-13 * ----- | 1-14 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 1. März 2024 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 19 9445

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01−03−2024

| Im Recherchenbericht angeführtes Patentdokument | Datum der Veröffentlichung | Mitglied(er) der Patentfamilie | Datum der Veröffentlichung |
|---|---|---|---|
| US 10931111 B2 | 23−02−2021 | AU 2017312360 A1 | 21−03−2019 |
| | | EP 3501077 A1 | 26−06−2019 |
| | | GB 2552973 A | 21−02−2018 |
| | | JP 7042801 B2 | 28−03−2022 |
| | | JP 2019525712 A | 05−09−2019 |
| | | US 2019173282 A1 | 06−06−2019 |
| | | WO 2018033710 A1 | 22−02−2018 |
| EP 3340415 A1 | 27−06−2018 | DE 102016225787 A1 | 21−06−2018 |
| | | EP 3340415 A1 | 27−06−2018 |
| US 2015001944 A1 | 01−01−2015 | DE 102011055225 A1 | 16−05−2013 |
| | | EP 2777130 A2 | 17−09−2014 |
| | | US 2015001944 A1 | 01−01−2015 |
| | | WO 2013068249 A2 | 16−05−2013 |
| US 2014277808 A1 | 18−09−2014 | CA 2846342 A1 | 15−09−2014 |
| | | US 2014277808 A1 | 18−09−2014 |
| US 2012029720 A1 | 02−02−2012 | EP 2599182 A1 | 05−06−2013 |
| | | US 2012029720 A1 | 02−02−2012 |
| | | WO 2012015507 A1 | 02−02−2012 |

EPO FORM P0461

Für nähere Einzelheiten zu diesem Anhang : siehe Amtsblatt des Europäischen Patentamts, Nr.12/82